Europäisches Patentamt

European Patent Office

Office européen des brevets

(11) Numéro de publication : **0 472 453 A1**

# (12) DEMANDE DE BREVET EUROPEEN

(21) Numéro de dépôt : **91402209.0**

(51) Int. Cl.$^5$ : **F42B 15/38**

(22) Date de dépôt : **08.08.91**

(30) Priorité : **20.08.90 FR 9010472**

(43) Date de publication de la demande :
**26.02.92 Bulletin 92/09**

(84) Etats contractants désignés :
**BE DE ES GB IT NL**

(71) Demandeur : **AEROSPATIALE SOCIETE
NATIONALE INDUSTRIELLE Société
Anonyme dite:
37, Boulevard de Montmorency
F-75016 Paris (FR)**

(72) Inventeur : **Fauvel, Gilbert
131 Ter, Avenue de Paris
F-78820 Juziers (FR)**

(74) Mandataire : **Bonnetat, Christian
CABINET BONNETAT 23, Rue de Léningrad
F-75008 Paris (FR)**

(54) **Liaison cassable au moyen d'une charge détonante.**

(57) — L'invention concerne un système de liaison cassable, destiné à permettre la séparation de pièces, notamment des structures hautes d'un engin spatial, du type comportant deux plaquettes (21,22) qui réunissent mécaniquement lesdites pièces (30,31) et entre lesquelles est disposée une charge détonante (24), telle qu'un cordeau pyrotechnique (24).

— Selon l'invention, les deux plaquettes (21,22) sont superposées l'une contre l'autre le long d'un plan de joint, en définissant entre elles un logement (23) pour la réception de ladite charge détonante (24), les faces d'extrémité (30B,31B) desdites pièces présentent des évidements (30A,31A) dans lesquels s'engagent respectivement les extrémités correspondantes (21A,22A et 21B,22B) desdites plaquettes superposées, et des moyens de fixation (25) solidarisent les extrémités desdites plaquettes dans les évidements desdites pièces.

EP 0 472 453 A1

*Fig. 4*

La présente invention concerne un système de liaison cassable destiné à permettre la séparation de pièces au moyen d'une charge détonante, telle qu'un cordeau pyrotechnique.

Quoique non exclusivement, le système selon l'invention est destiné aux domaines aéronautique et spatial pour permettre la séparation de certaines pièces d'aéronefs ou de lanceurs spatiaux. Par exemple, ces systèmes peuvent assurer la liaison entre les différentes pièces des structures hautes d'un lanceur (c'est-à-dire de la coiffe porteuse de satellite) et provoquer, lorsque les cordeaux pyrotechniques sont initiés, la séparation desdites pièces.

Jusqu'à présent, ces pièces, qui forment dans l'exemple précité les enveloppes externes des structures de support de satellite d'un lanceur spatial, sont réalisées séparément puis stockées, avant d'être assemblées au moyen des systèmes de liaison cassables. Aussi, en raison des dimensions élevées de ces pièces qui peuvent dans ce cas atteindre plusieurs mètres de diamètre ou en raison de leur forme complexe, on conçoit des systèmes qui s'adaptent à celles-ci.

Ainsi, pour assembler deux pièces destinées à être par la suite séparées l'une de l'autre, les systèmes de liaison cassables connus comprennent deux cadres présentant, à une de leurs extrémités, une forme de chape dans chacune desquelles est alors inséré le bord correspondant d'une des pièces, qui y est maintenu par collage et/ou par des boulons traversant radialement l'assemblage réalisé. Le système comporte, par ailleurs, des plaquettes de raccordement permettant d'assembler, au moyen de boulons, les autres extrémités en regard desdits cadres et disposées en regard l'une de l'autre, de part et d'autre desdites autres extrémités desdits cadres. Le cordeau pyrotechnique, qui est inséré, de façon connue, dans un tube expansible pour éviter une pollution ultérieure de l'espace, est disposé dans un logement de réception délimité qui les plaquettes de raccordement en regard et les extrémités correspondantes des cadres pénétrant entre lesdites plaquettes. Des zones de moindre résistance sont prévues sur lesdites plaquettes, de façon que, lorsque le cordeau pyrotechnique est commandé, le tube expansible rompe les plaquettes au niveau desdites zones, en séparant ainsi les deux pièces.

Ce type de système de liaison cassable, bien que donnant satisfaction, présente néanmoins des inconvénients, notamment en raison du fait que, par sa structure même, lesdites plaquettes et ledit cordeau pyrotechnique doivent être assemblés auxdits cadres comme des pièces individuelles, de sorte que le montage des plaquettes et du cordeau pyrotechnique sur lesdits cadres est long et délicat. De plus, à cause de l'utilisation desdits cadres, un tel système de liaison connu présente une masse et un encombrement importants. Comme les exigences de sécurité imposées dans les domaines d'application sont extrêmement rigoureuses, il n'est pas aisé de réduire la masse du système. Par ailleurs, la conception d'un tel système connu conduit à une symétrie de réalisation évidente, de sorte que le cordeau pyrotechnique est disposé dans le plan transversal médian des plaquettes, à égale distance des liaisons entre les plaquettes et les cadres, ce qui ne permet pas d'optimiser l'effort de rupture délivré par le cordeau.

La présente invention a pour objet de pallier ces inconvénients et concerne un système de liaison cassable permettant la séparation de pièces, notamment des structures hautes d'un lanceur spatial, au moyen d'une charge détonante, dont la conception, simple, permet le montage aisé dudit système sur lesdites pièces, tout en diminuant la masse du système et en optimisant l'effort de rupture produit par la charge détonante.

A cet effet, le système de liaison cassable, destiné à permettre la séparation de pièces, notamment des structures hautes d'un engin spatial, du type comportant deux plaquettes qui réunissent mécaniquement lesdites pièces et entre lesquelles est disposée une charge détonante, telle qu'un cordeau pyrotechnique, est remarquable, selon l'invention, en ce que les deux plaquettes sont superposées l'une contre l'autre le long d'un plan de joint, en définissant entre elles un logement pour la réception de ladite charge détonante, en ce que les faces d'extrémité desdites pièces présentent des évidements dans lesquels s'engagent respectivement les extrémités correspondantes desdites plaquettes superposées, et en ce que des moyens de fixation solidarisent les extrémités desdites plaquettes dans les évidements desdites pièces.

Ainsi, le système de liaison cassable selon l'invention peut être aisément monté. En effet, les deux plaquettes et le cordeau pyrotechnique peuvent être, préalablement à la fixation sur lesdites pièces, assemblés les uns aux autres (ne serait-ce que par simple application des plaquettes l'une contre l'autre le long de leur plan de joint avec insertion du cordeau pyrotechnique entre elles) pour former un sous-système qui, lui, est fixé d'un bloc auxdites pièces. Les plaquettes et le cordeau pyrotechnique ne sont donc plus, grâce à l'invention, montés individuellement sur lesdites pièces. De plus, grâce à l'invention, on peut s'affranchir des cadres initialement montés sur lesdites pièces, ce qui a pour conséquence de diminuer considérablement la masse et l'encombrement du système. Par ailleurs, alors que dans les réalisations antérieures on cherchait systématiquement à concevoir des systèmes qui s'adaptent, par l'intermédiaire de cadres, aux pièces sans recourir à des interventions sur celles-ci pour les raisons évoquées préalablement, le système autorise, grâce à des évidements pratiqués sur les faces d'extrémité correspondantes desdites pièces, l'assemblage direct dudit sous-système sur ces pièces.

On sait par ailleurs que les pièces utilisées en technologie spatiale sont souvent du type composite, c'est-à-dire qu'elles comprennent deux peaux résistantes, par exemple à base de fibres de carbone, entre lesquelles est disposée une âme, par exemple du type à nid d'abeilles. Le système selon l'invention est particulièrement approprié à de telles pièces.

En effet, dans ce cas, les extrémités desdites plaquettes superposées sont engagées dans des évidements desdites pièces, avantageusement définis par des réserves dans le bord périphérique de ladite âme par rapport aux bords périphériques respectifs des peaux résistantes. Ainsi, est-il particulièrement aisé de concevoir ces évidements lors de la fabrication même desdites pièces. On remarquera de plus que, dans ce cas, lesdites plaquettes permettent la transmission, d'une pièce à l'autre, des efforts passant par les peaux desdites pièces.

Selon une autre caractéristique du système, ledit logement de réception de la charge détonante est, de préférence, décalé par rapport au plan transversal médian desdites plaquettes superposées, perpendiculaire au plan de joint, pour être proche de l'une desdites extrémités des plaquettes. Grâce à cela, la charge détonante, lorsqu'elle est actionnée pour séparer les pièces, provoque une rupture par cisaillement, dans laquelle le maximum d'énergie est utilisé pour rompre lesdites plaquettes, et non pas pour tordre celles-ci.

Pour faciliter encore plus la rupture des plaquettes et la séparation des pièces, dans les parois des plaquettes, délimitant le logement de réception de la charge détonante, sont prévues des entailles, créant ainsi des zones locales de moindre résistance dans lesdites plaquettes. Avantageusement, lesdites entailles, ménagées dans les parois délimitant le logement de réception de ladite charge, sont disposées dans la partie des parois la plus éloignée du plan transversal médian des plaquettes, au voisinage de ladite charge détonante.

Selon encore une autre caractéristique du système, une cavité est également ménagée dans lesdites plaquettes superposées au niveau du plan de joint, ladite cavité étant disposée parallèlement audit logement de réception, pour être proche de l'autre desdites extrémités des plaquettes.

Cette cavité permet, d'une part, de réduire encore la masse des plaquettes tout en conservant leur tenue mécanique, et, d'autre part, de créer des zones d'affaiblissement dans lesdites plaquettes au niveau des bords desdites peaux de la pièce correspondante, de sorte que, lors de l'initiation de la charge détonante, les plaquettes se tordent facilement autour de ces zones d'affaiblissement, et que le maximum d'énergie est disponible pour la rupture desdites plaquettes.

Dans le cas où il est destiné à séparer deux pièces le long d'une ligne circulaire, le système selon l'invention peut comporter une pluralité de couples de plaquettes, dont chacun, comportant une plaquette externe et une plaquette interne superposées, constitue une portion de couronne, lesdits couples de plaquettes pouvant être disposés de façon adjacente ou espacée les uns des autres.

Les figures du dessin annexé feront bien comprendre comment l'invention peut être réalisée. Sur ces figures, des références identiques désignent des éléments semblables.

La figure 1 est une demi-vue en coupe longitudinale de deux pièces de révolution d'un lanceur spatial, réunies entre elles par un système de liaison cassable connu et destinées à être séparées l'une de l'autre par ledit système.

La figure 2 illustre en coupe le système de liaison cassable selon l'invention destiné à séparer deux pièces d'un lanceur spatial.

La figure 3 est une vue agrandie du système de liaison connu représenté sur la figure 1.

La figure 4 représente une application avantageuse du système de liaison cassable selon l'invention à des pièces de type composite.

La figure 5 montre en perspective partielle un exemple de réalisation du système selon l'invention, appliqué à la séparation de deux pièces le long d'une ligne de rupture circulaire.

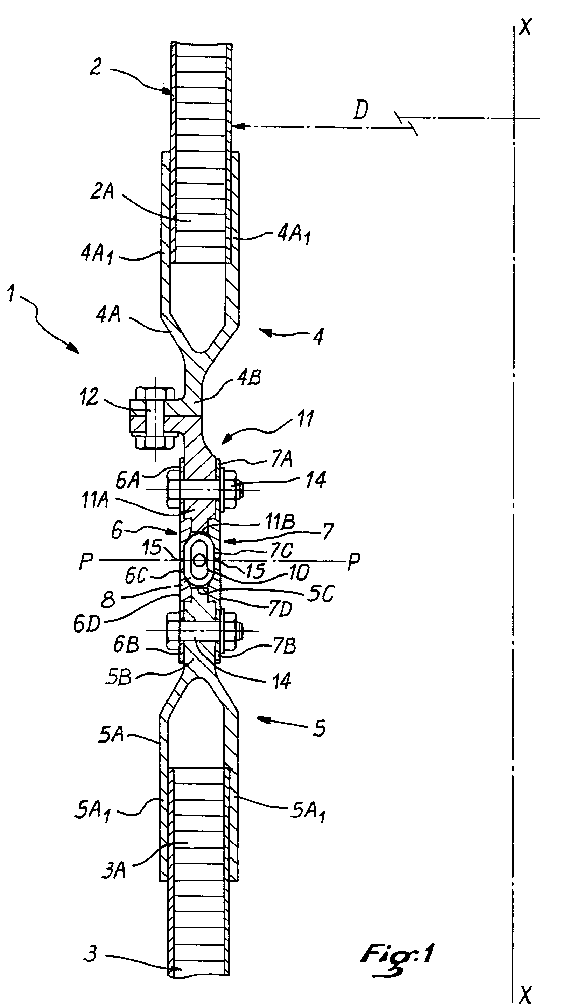

Le système de liaison cassable 1 selon l'art antérieur, montré sur la figure 1, est destiné à séparer deux pièces 2 et 3, telles que par exemple les enveloppes cylindriques externes formant deux des étages d'une structure haute d'un lanceur spatial. On a représenté l'axe longitudinal X-X du lanceur et le diamètre D des pièces qui peut atteindre plusieurs mètres.

Pour cela, le système 1 comporte deux cadres cylindriques 4 et 5 terminés à une de leurs extrémités par une chape en U respectivement 4A et 5A. Ainsi, entre les bras $4A_1$ de la chape 4A est engagée l'extrémité 2A de la pièce cylindrique 2, tandis qu'entre les bras $5A_1$ de la chape 5A est introduite l'extrémité 3A de la pièce cylindrique 3. L'assemblage entre les chapes des cadres et les extrémités des pièces est assuré, de façon connue, par collage et, éventuellement, par des boulons, non représentés, traversant radialement les liaisons.

Le système 1 comprend également deux plaquettes 6 et 7 en forme de secteurs cylindriques permettant, d'une part, de réunir les deux cadres 4 et 5 et, d'autre part, de définir un logement interne 8 dans lequel est agencée la charge détonante, telle qu'un cordeau pyrotechnique 10 disposé dans un tube expansible.

Dans cet exemple connu de réalisation, le système 1 comporte un cadre intermédiaire cylindrique de démontabilité 11 fixé à l'extrémité 4B du cadre 4 par des boulons 12. Les plaquettes cylindriques 6 et 7 réunissent par conséquent le cadre intermédiaire 11 et le cadre 5. Pour cela, les extrémités 6A et 6B de la plaquette circulaire 6, externe par rapport à l'axe longitudinal X-X, et les extrémités 7A et 7B de la plaquette circulaire interne 7 s'appliquent respectivement de part et d'autre des extrémités 11A et 5B desdits cadres en les recouvrant, lesquelles présentent un profil identique. Des boulons 14 solidarisent radialement les plaquettes aux cadres.

Le logement cylindrique 8, de section approximativement oblongue, dans lequel est disposé le cordeau pyrotechnique 10, est situé dans le plan transversal médian P-P des plaquettes et il est délimité par les faces en regard respectivement 6C et 7C des plaquettes et par les bords 11B et 5C des cadres. Ce cadre intermédiaire 11 autorise par conséquent le démontage du système sans recourir au démontage total de celui-ci. Par ailleurs, il est également prévu, dans le plan transversal médian des plaquettes, des entailles 15 sur les faces extérieures 6D et 7D des plaquettes, de façon à favoriser la rupture de celles-ci lorsque le cordeau pyrotechnique est initié, et à provoquer la séparation des pièces cylindriques 2 et 3.

Ainsi, la conception des systèmes actuels 1 implique un montage individuel des plaquettes et du cordeau pyrotechnique sur lesdites pièces, une masse importante, un encombrement élevé et une symétrie de réalisation qui n'optimise pas l'effort de rupture délivré par le cordeau pyrotechnique sur les plaquettes 6 et 7.

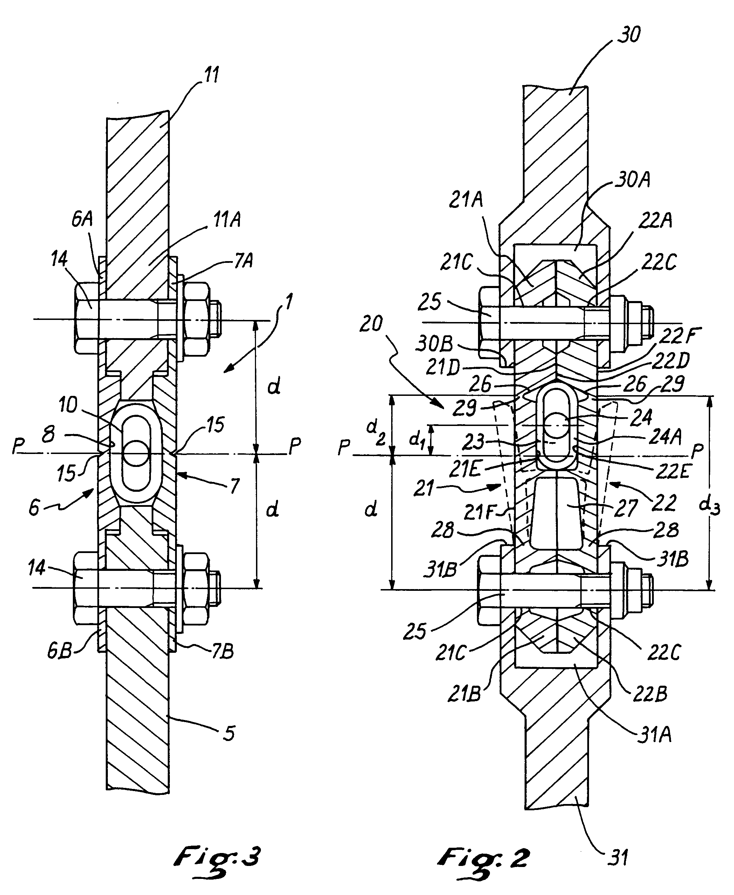

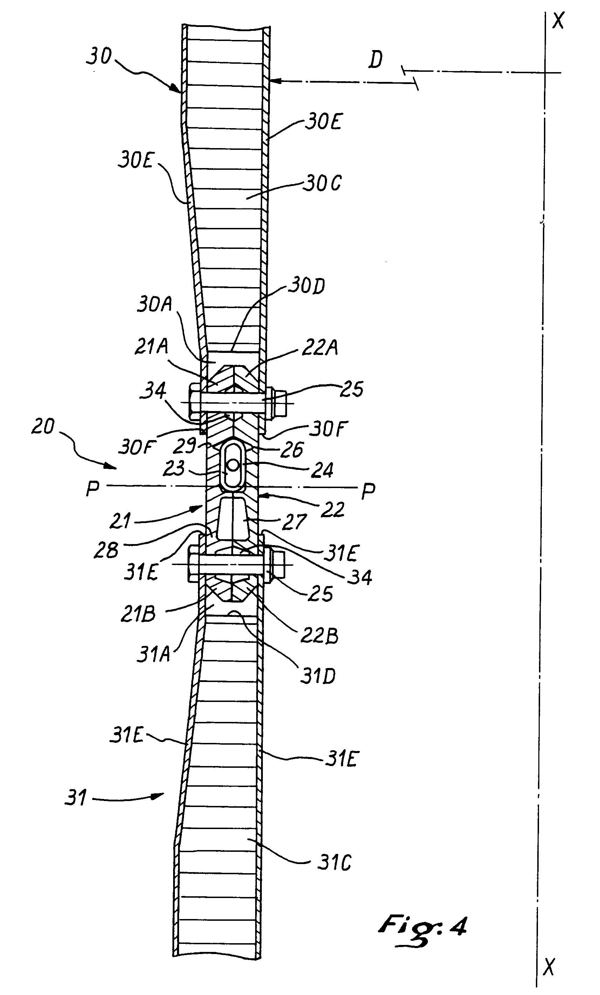

Selon l'invention, le système de liaison cassable 20 conforme à l'invention et représenté sur les figures 2 et 4, obvie à ces inconvénients.

Dans cet exemple, il comprend, en regard de la figure 2, une plaquette externe 21 et une plaquette interne 22, concentriques par rapport à l'axe longitudinal X-X, qui sont superposées l'une contre l'autre le long d'un plan de joint en définissant entre elles un logement 23 destiné à la réception de la charge détonante, telle qu'un cordeau pyrotechnique 24. Les extrémités communes 21A et 22A, et, 21B et 22B, des plaquettes s'engagent directement dans des évidements 30A et 31A ménagés respectivement dans les faces d'extrémité 30B et 31B des pièces de révolution 30 et 31. Ces évidements, circulaires, présentent une section en forme de U.

Les plaquettes superposées sont maintenues dans les évidements des pièces par des boulons 25 qui traversent radialement des orifices 21C et 22C prévus en correspondance dans les extrémités des plaquettes.

Par ailleurs, dans les faces intérieures 21D et 22D, au contact l'une de l'autre et formant le plan de joint des plaquettes 21 et 22, est ménagé le logement 23, contre les parois 21E et 22E duquel est agencé le cordeau pyrotechnique 24 de section sensiblement oblongue. Ce dernier comprend notamment un tube expansible 24A destiné à éviter, de façon connue, la pollution de l'espace, lorsque le cordeau est initié. Avantageusement, le logement 23 est décalé par rapport au plan transversal médian P-P des plaquettes 21 et 22, perpendiculaire au plan de joint, pour être rapproché des extrémités communes 21A et 22A desdites plaquettes.

Aussi, pour bien illustrer l'importance du décalage du cordeau 24, disposé dans le logement 23, et l'effet supplémentaire qui en découle, on a représenté sur la figure 3, à la même échelle et au côté du système de l'invention illustré sur la figure 2, une partie du système antérieur montré sur la figure 1.

Sur cette figure 3, on retrouve les plaquettes 6 et 7 entre lesquelles est disposé, dans le plan transversal médian P-P, le cordeau pyrotechnique 10 dans le logement 8. Les plaquettes 6 et 7 sont reliées par les boulons 14 aux cadres 11 et 5, eux-même respectivement fixés aux pièces. Sur la figure 3, les distances $d$ séparant l'axe du cordeau 10, contenu dans le plan $\overline{P\text{-}P}$, des axes des boulons 14, sont égales, de sorte que la rupture provoquée par le cordeau sur les plaquettes se produit par traction.

En revanche, sur la figure 2, comme le logement 23 est décalé, l'axe du cordeau pyrotechnique 24 se trouve à une distance $\underline{d}1$ du plan transversal médian P-P séparant les axes des boulons 25 de la distance $\underline{d}$. De la sorte, l'effort produit par le cordeau sur chaque plaquette entraîne une rupture par cisaillement. En outre, pour optimiser la rupture, des entailles 26 sont prévues dans les parois 21E et 22E des faces intérieures 21D et 22D, délimitant le logement 23 pour créer ainsi des zones locales de moindre résistance 29 délimitées entre les entailles 26 et les faces extérieures 21F et 22F des plaquettes. Les entailles 26 sont avantageusement situées dans la partie de parois du logement la plus éloignée du plan transversal médian P-P, à une distance $\underline{d}2$ de celui-ci, du côté dudit tube expansible 24A.

Ainsi, l'effet de rupture dû au cordeau pyrotechnique est encore plus important en raison du bras de levier $\underline{d}3$, ainsi créé, correspondant à la somme des distances $\underline{d} + \underline{d}2$, séparant le boulon 25, qui relie la pièce 31 aux plaquettes 21,22, des entailles 26.

Par ailleurs, une cavité 27 est également ménagée dans les faces intérieures 21D et 22D, formant le plan de joint, des plaquettes superposées. Cette cavité 27, dont la section est sensiblement trapézoïdale, est disposée parallèlement au logement 23 pour être proche des extrémités 21B et 22B des plaquettes. Aussi, outre le fait que cette cavité 27 entraîne une diminution de la masse des plaquettes, elle présente l'avantage de créer de part et d'autre des plaquettes, au niveau de la face d'extrémité 31B de la pièce 31, des zones d'affaiblissement 28 autour desquelles lesdites plaquettes peuvent aisément se tordre. On a représenté sur la figure 2, en traits pointillés, les zones de moindre résistance 29 des plaquettes, rompues au niveau des entailles 26 lors de l'explosion du cordeau 24, les parties des plaquettes reliées à la pièce 31 ayant ainsi tendance à pivoter autour de ces zones d'affaiblissement 28 qui forment alors des lignes de pliage pour lesdites plaquettes 21,22.

Les pièces, définissant dans l'application de la figure 4 les enveloppes des structures hautes d'un lanceur spatial, sont du type composite, c'est-à-dire qu'elles comprennent deux peaux résistantes cylindriques, interne et externe, par exemple à base de fibres de carbone, entre lesquelles est disposée une âme, par exemple du type à nid d'abeilles. Tel est le cas des pièces 2,3 et 30,31 montrées respectivement sur les figures 1 et 4.

Aussi, sur la figure 4, pour emboîter le système 20 dans ces pièces composites, il est particulièrement aisé de réaliser les évidements 30A et 31A durant la fabrication même des pièces. Pour cela, on prévoit, dans chaque pièce 30 et 31, des réserves dans les bords 30D et 31D respectivement de l'âme 30C et 31C par rapport aux bords 30F et 31F, qui définissent les faces d'extrémité 30B et 31B des pièces, desdites peaux résistantes 30E et 31E.

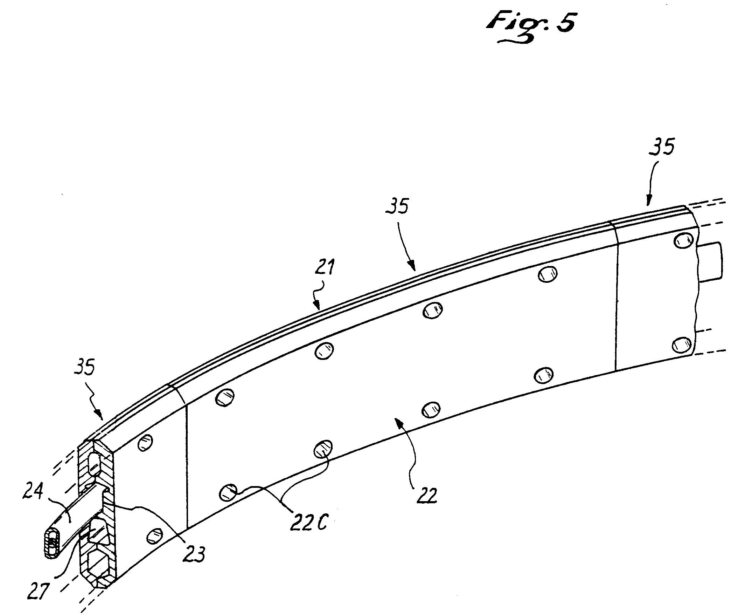

Dans le mode de réalisation illustré partiellement sur la figure 5, le système conforme à l'invention comporte une pluralité de couples de plaquettes 35. Chaque couple 35 comporte une plaquette externe 21 et une plaquette interne 22 superposées qui forment ainsi une portion de couronne. De part et d'autre du couple 35 de plaquettes représenté, on a illustré partiellement les couples de plaquettes adjacents qui, lorsqu'ils sont assemblés, forment ainsi deux couronnes superposées de plaquettes, externe et interne. Toutefois, dans une variante de réalisation, les couples de plaquettes peuvent être espacés les uns des autres.

## Revendications

1.  Système de liaison cassable, destiné à permettre la séparation de pièces, notamment des structures hautes d'un engin spatial, du type comportant deux plaquettes (21,22) qui réunissent mécaniquement lesdites pièces (30,31) et entre lesquelles est disposée une charge détonante (24), telle qu'un cordeau pyrotechniques, caratérisé en ce que les deux plaquettes (21,22) sont supperposées l'une contre l'autre le long d'un plan de joint, en définissant entre elles un logement (23) pour la réception de ladite charge détonante (24), en ce que les faces d'extrémité (30B,31B) desdites pièces preésentent des évidements (30A,31A) dans lesquels s'engagent respectivement les extrémités correspondantes (21A,22A et 21B,22B) desdites plaquettes superposés, et en ce que des moyens de fixation (25) solidarisent les extrémités desdites plaquettes dans les évidements desdites pièces.

2.  Système selon la revendication 1, dans lequel lesdites pièces (30,31) sont du types composite, comprenant deux peaux résistantes (30E,31E) entre lesquelles est disposée une âme (30C,31C), caractérisé en ce que les extrémités (21A,22A et 21B,22B) desdites plaquettes superposées sont engagées dans des évidements (30A,31A) desdites pièces, définis lors de la fabrication ce celles-ci par des réserves dans le bord périphérique (30D,31D) de ladite âme, par rapport aux bords périphériques respectifs (30F,31F) des peaux résistantes.

3.  Système selon l'une des revendications 1 ou 2, caractérisé en ce que ledit logement de réception (23) de la charge détonante (24) est décalé par rapport au plan transversal médian desdites plaquettes superposées, pour être proche de l'une (21A,22A) desdites extrémités des plaquettes (21,22).

4.  Système selon l'une des revendications 1 à 3, caractérisé en ce que, dans les parois (21E,22E) des plaquettes, délimitant le logement de réception (23) de la charge détonante, sont prévues des entailles (26), créant des zones locales de moindre résistance dans lesdites plaquettes.

5.  Système selon la revendication 4, caractérisé en ce que lesdites entailles (26), ménagées dans les parois des plaquettes délimitant le logement de réception de ladite charge, sont disposées dans la partie des parois la plus éloignée du plan transversal médian des plaquettes, au voisinage de ladite charge détonante.

6.  Système selon la revendication 3, caractérisé en ce qu'une cavité (27) est également ménagée dans lesdites plaquettes superposées (21,22) au niveau du plan de joint, ladite cavité étant disposée parallèlement audit logement de réception (23) pour être proche de l'autre (21B,22B) desdites extrémités des plaquettes.

7.  Système selon l'une quelconque des revendications 1 à 6, destiné à la séparation de deux pièces le long d'une ligne circulaire, caractérisé en ce qu'il comporte une pluralité de couples (35) de plaquettes, dont chacun, comportant une plaquette externe (21) et une plaquette interne (22) superposées, constitue une portion de couronne, lesdits couples (35) de plaquettes pouvant être disposés de façon adjacente ou espacée les uns des autres.

*Fig.1*

Fig:3

Fig:2

Fig. 4

Fig. 5

**Office européen des brevets**

# RAPPORT DE RECHERCHE EUROPEENNE

Numero de la demande

EP  91 40 2209

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | US-A-3 032 356  (BOTSFORD)<br>* Colonne 2, lignes 42-60; colonne 3, ligne 9 - colonne 5, ligne 27; colonne 5, lignes 59-65; revendications; figures 1-4 *<br>--- | 1,2 | F 42 B   15/38 |
| A | EP-A-0 273 061  (McDONNELL DOUGLAS)<br>* Colonne 3, lignes 13-31; colonne 4, ligne 43 - colonne 5, ligne 24; revendications; figures 1-3 *<br>--- | 1-6 | |
| A | FR-A-2 638 228  (OEA INC. - US)<br>* Le document en entier *<br>--- | 1-6 | |
| A | EP-A-0 246 958  (AEROSPATIALE S.A.)<br>* Colonne 2, lignes 4-21; colonne 3, lignes 3-16; colonne 4, ligne 26 - colonne 5, ligne 31; revendications; figures *<br>----- | 1-6 | |

**DOMAINES TECHNIQUES RECHERCHES (Int. Cl.5)**

F 42 B

Le présent rapport a été établi pour toutes les revendications

| Lieu de la recherche | Date d'achèvement de la recherche | Examinateur |
|---|---|---|
| LA HAYE | 22-11-1991 | DOUSKAS K. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
........................................................................................
& : membre de la même famille, document correspondant

EPO FORM 1503 03.82 (P0402)